# EUROPEAN PATENT SPECIFICATION

(11) **EP 3 337 711 B1**
(45) Date of publication and mention of the grant of the patent: **11.11.2020**
(21) Application number: 16750639.3
(22) Date of filing: 20.07.2016
(51) Int. Cl.: B62B 7/08

(54) **STROLLER**
KINDERWAGEN
POUSSETTE

(30) Priority: 19.08.2015 NL 2015318
(43) Date of publication of application: 27.06.2018
(73) Proprietor: Maxi Miliaan B.V., 5704 RD Helmond (NL)
(72) Inventor: STORM, Gerjan, 5651 ED Eindhoven (NL); VAN DIJK, John Gert Til, 5701 RT Helmond (NL); DE HAAS, Fortunatus Johannes, 4153 AW Beesd (NL)
(74) Representative: Veldman-Dijkers, Cornelia G. C.
(86) International application number: PCT/EP2016/067279
(87) International publication number: WO 2017/029056

(56) References cited:
- WO-A2-2007/134185
- DE-U1- 20 313 208
- GB-A- 2 426 231
- GB-A- 2 431 140
- US-A- 1 035 976

## Description

### FIELD OF THE INVENTION

The invention relates to a stroller being foldable from an erect position to a collapsed position and vice versa, which stroller comprises a collapsible folding mechanism provided with a push bar and at least one four-bar linkage mechanism.

### BACKGROUND OF THE INVENTION

Such a stroller, which is known from US1035976A, comprises a push bar pivotally connected at an end to a longitudinal side member and pivotally connected at a distance from said end to a longitudinal guard member. At a side remote of the push bar, an upright member is pivotally connected to the longitudinal side member and pivotally connected to a longitudinal guard member. The push bar, longitudinal side member, longitudinal guard member and upright member form a four-bar linkage mechanism. The stroller comprises two such four-bar linkage mechanisms, one on each side of the stroller. When the stroller is erected the push bars are held against forward movement by folding rule-joint braces composed of links pivoted together and pivoted at their ends to the push bars and to the side members, respectively. Another stroller, known by WO2007134185A2, has a stroller frame supporting a stroller scat. The stroller frame includes a linkage that facilitates collapsing or folding of the stroller frame from an in-use configuration to a folded or collapsed configuration, and unfolding of the stroller frame from the folded or collapsed configuration to the in-use configuration. The linkage also facilitates adjustment of the stroller seat height between at least two vertically offset positions.

A disadvantage of such a stroller is that the push bar, being used amongst others to push the stroller in a forward direction, forms part of the four-bar linkage mechanism, so that the movement of the push bar is directed by and identical to the movement of a bar of the four-bar linkage mechanism. This limits the freedom of the designer.

### SUMMARY OF THE INVENTION

At least one of the objects of the invention is to provide a stroller which can easily be folded into a compact shape.

This object is accomplished with the stroller according to claim 1.

After unlocking the first part and the second part of the push bar in the erect position of the stroller, a user will move the handle so that the first part of the push bar will pivot with respect to the first bar of the four-bar linkage mechanism. Since the second part of the push bar is pivotally connected to the first part of the push bar as well as to the second bar of the four-bar linkage mechanism, pivoting of the first part of the push bar with respect to the first bar of the four-bar linkage mechanism, will cause pivoting of all the bars of the four-bar linkage mechanism, whereby the stroller will be folded to the collapsed position.

The push bar is not part of the four-bar linkage mechanism so that the four-bar linkage mechanism and the push bar can individually be optimized for performing their function.

Preferably the first bar and the second bar of the four-bar linkage mechanism are connected to each other near one side by a third bar and near another side by a fourth bar.

The four-bar linkage mechanism can be folded smoothly.

If the first bar is located at a higher level than the second bar, wheels of the stroller can for example be connected to or near ends of the second bar. The distance between the opposite ends of the second bar can be relatively large whereby a space will be obtained for a relatively large basket.

An embodiment of the stroller according to the invention is characterized in that the first part and the second part of the push bar are detachably lockable with respect to each other at least near the pivot.

By providing a lock near or at the pivot, the four-bar linkage mechanism can easily be locked in at least the erect position of the stroller. Preferably the unlocking of the first part and the second part of the push bar can be activated from the first part, and more preferably from the handle.

Another embodiment of the stroller according to the invention is characterized in that in the erect position of the stroller, the first part and the second part of the push bar are in line with each other.

Such an alignment, when locked, provides a strong push bar, which can easily maintain the four-bar linkage mechanism in the desired erect position.

Another embodiment of the stroller according to the invention is characterized in that the four-bar linkage mechanism is a parallelogram linkage mechanism.

With such a parallelogram linkage mechanism opposite bars of the parallelogram linkage mechanism, will always maintain parallel to each other. In the collapsed position of the stroller, the bars of the parallelogram linkage mechanism can be folded very close to each other.

A seat or a pram body will maintain the same for example horizontal orientation during folding of the frame.

Another embodiment of the stroller according to the invention is characterized in that the four-bar linkage mechanism comprising an upper bar, a lower bar, a front bar and a rear bar, wherein the lower bar is pivotably connected at a first pivot and a second pivot to the front bar and the rear bar respectively, whilst the upper bar is pivotably connected at a third pivot and a fourth pivot to the front bar and the rear bar respectively, wherein the first part of the push bar is pivotably connected at a fifth pivot to the upper bar and the second part of the push bar is pivotably connected at a sixth pivot to the lower bar, whilst ends of the first part and the second part are pivotably connected to each other at the pivot, being the seventh pivot.

With such an orientation of the pivots and push bar, the first part of push bar, being provided with the handle can easily extend upwards under any desired angle with the horizontal, so that the designer of the stroller has great freedom to optimize the orientation of the push bar as well as the dimensions of the four-bar linkage mechanism.

While folding the frame, a seat, adapter, a pram body or the like can stay on the frame. Wheels connected to the frame will remain on the ground, whilst the push bar is located at a distance from wheels. Since all wheels are constant on the ground during folding the stroller, a stable position of the stroller is maintained. This is also advantageous if the wheels have become dirty.

Preferably the four-bar linkage mechanism is a parallelogram linkage mechanism, whereby pivoting the first part of the push bar will result in a gradually continuous folding of the four-bar linkage mechanism.

Another embodiment of the stroller according to the invention is characterized in that at least in the erect position at least one of the first part and second part of the push bar extend in another direction as the front bar and the rear bar.

With such orientation the push bar, when locked, will easily prevent folding of the four-bar linkage mechanism.

Another embodiment of the stroller according to the invention is characterized in that the fifth pivot is located between the third pivot and the forth pivot, whilst the first pivot is located between the second pivot and the sixth pivot.

Such an orientation of the pivots, provides a folding mechanism which can be collapsed in a compact form in an intuitive way.

Another embodiment of the stroller according to the invention is characterized in that during folding of the stroller, the first part of the push bar pivots in opposite direction with respect to the upper bar as the front bar and the rear bar, whilst the second part pivots in the same direction with respect to the lower bar as the front bar and the rear bar or vice versa.

In this manner, the folding mechanism can easily be collapsed in a compact form.

### BRIEF DESCRIPTION OF THE DRAWINGS

The stroller according to the invention will further be explained with reference to the drawings, wherein,
figure 1 shows a perspective view of a first embodiment of a stroller according to the invention,
figure 2 shows a side view of the stroller as shown in figure 1,
figure 3 shows a bottom view of the stroller as shown in figure 1,
figure 4A and 4B show schematic views of the folding mechanism of the stroller as shown in figure 1 in an erect position and partially collapsed position of the stroller,
figures 5A-5D show side views of the stroller as shown in figure 1, in respectively an erect position, a position wherein the length of the push bar is reduces, a partially collapsed position and a fully collapsed position of the stroller,
figure 6 shows a perspective view of a second embodiment of a stroller according to the invention,
figure 7 shows a side view of the stroller as shown in figure 6.

In the drawings, like reference numerals refer to like elements.

### DESCRIPTION OF PREFERRED EMBODIMENTS

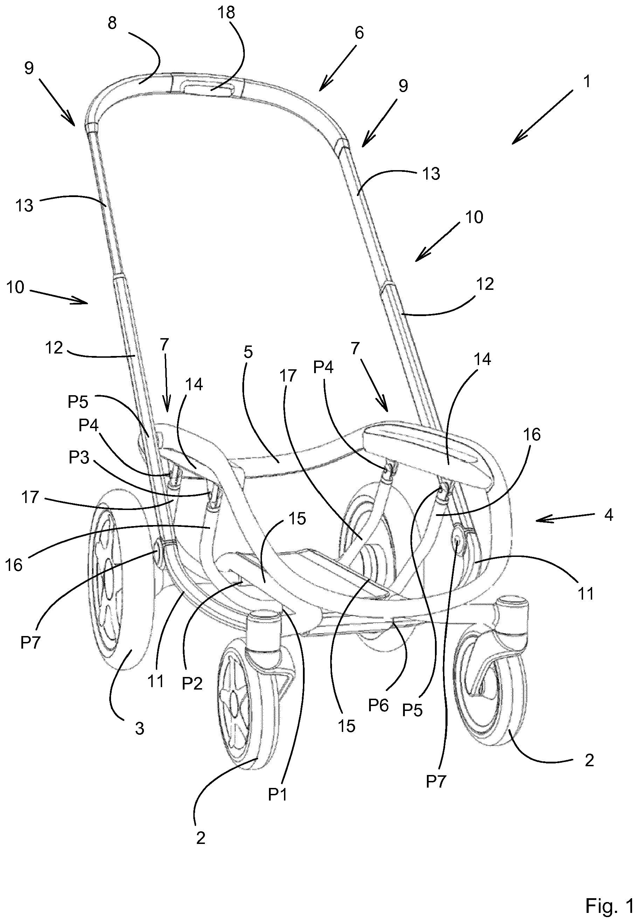

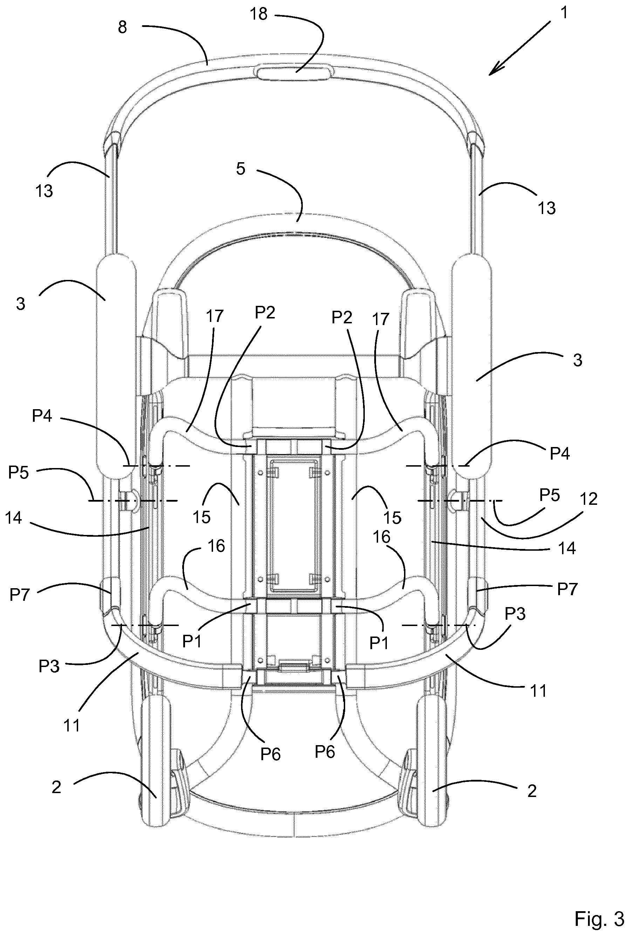

Figures 1-3 show perspective view, a side view and a bottom view of a first embodiment of a stroller 1 according to the invention.

The stroller 1 comprises two front wheels 2, two rear wheels 3, a collapsible folding mechanism 4 supported by the wheels 2, 3 and a ring shape frame 5 to which a seat for a child can be detachably connected. To better show the relevant aspects of the invention the seat is not shown in the figures.

The collapsible folding mechanism 4 is provided with a push bar 6 and two four-bar linkage mechanisms 7, one on each side of the stroller 1. The push bar 6 is U-shaped and comprises a bridge part 8 and two leg portions 9. The bridge part 8 forms the handle of the push bar 6. Each leg portion 9 comprises an extendable first part 10 and a second part 11. The first part 10 is provided with a lower portion 12 and an upper portion 13 which is slidable located inside the lower portion 12. The upper portion 13 is connected at a side remote of the lower portion 12 to the bridge part 8.

Each four-bar linkage mechanism 7 comprises an upper bar 14, a lower bar 15, a front bar 16 and a rear bar 17. The lower bar 15 is pivotably connected at a first pivot P1 to the front bar and at a second pivot P2 to rear bar 17. The upper bar 14 is pivotably connected at a third pivot P3 to the front bar 16 and at a fourth pivot P4 to the rear bar 17. The first part 10 of the push bar 6 is pivotably connected at a fifth pivot P5 to the upper bar 14. The second part 11 of the push bar 6 is pivotably connected at a sixth pivot P6 to the lower bar 15. Ends of the first part 10 and the second part 11 are pivotably connected to each other at a seventh pivot P7.

The pivotably connected upper bar 14, lower bar 15, front bar 16 and rear bar 17 form a parallelogram linkage mechanism, whereby the upper bar 14 and the lower bar 15 always remain parallel. Also the front bar 16 and rear bar 17 always remain parallel.

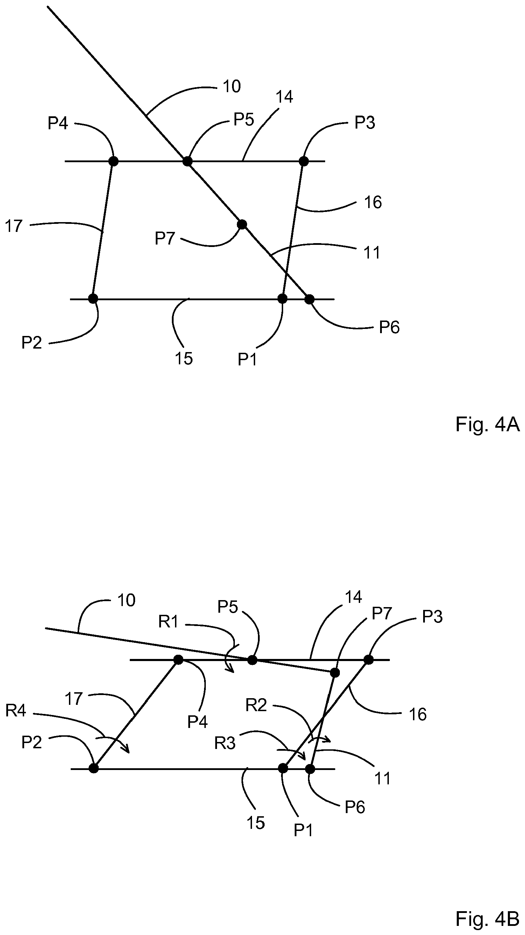

As can best be seen in figure 4A showing a schematic view of the folding mechanism of the stroller in the erect position, the fifth pivot P5 is located between the third pivot P3 and the forth pivot P4, whilst the first pivot P1 is located between the second pivot P2 and the sixth pivot P6.

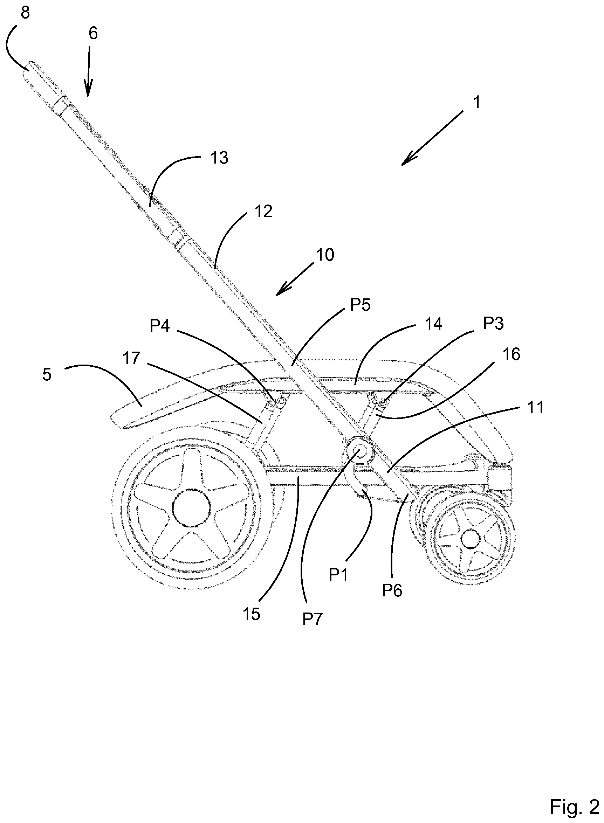

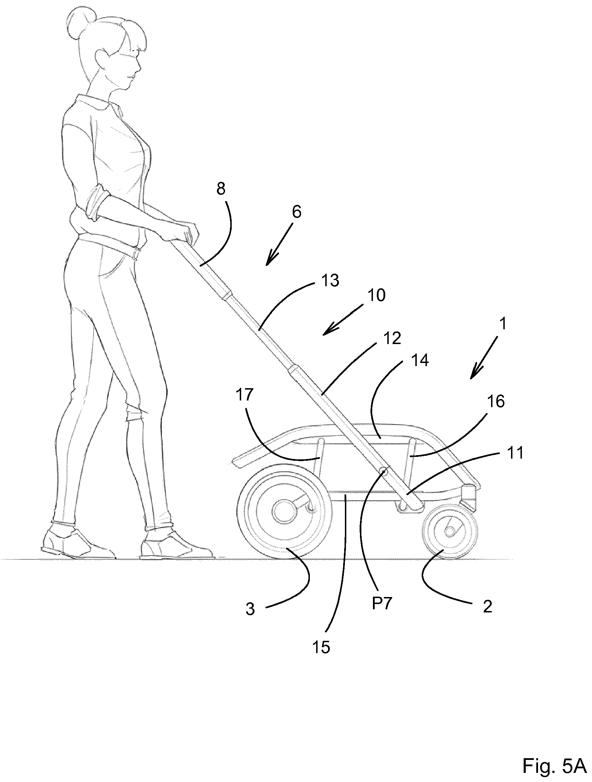

As can be seen in the figures 2 and 5A, in the erect position of the stroller 1, the first part 10 and the second part 11 of the push bar 6 are in line with each other.

The stroller 1 is further provided with a locking mechanism to detachably lock on both sides of the stroller the first part 10 and the second part 11 of the push bar 6 with respect to each other in the erect position of the stroller 1 to prevent collapsing of the four-bar linkage mechanisms 7.

The lock can for example be a pin which is slidable under spring force from the first part 10 partly into the second part 11 in the erect position of the stroller 1. The bridge part 8 is provided with a push button 18 to unlock the locking mechanism. In case of the given example pushing on the push button 18 will cause the pin to be retracted against spring force out of the second part 11 and fully into the first part 10. Other locking mechanisms are also possible, for example whereby a slidable movement of the upper portion 13, unlocks a pivot, for example pivot P6 or P7, in the four-bar linkage mechanisms 7.

As can be seen in the figures the front bars 16 and the rear bars 17 are inclined towards the forward direction, whilst the first part 10 and the second part 11 of the push bar 6 are inclined towards the rearward direction.

Figure 4B shows a schematic view of the folding mechanism 4 of the stroller 1 in a partially collapsed position of the stroller 1. When collapsing the folding mechanism 4 after unlocking the locking mechanism, the first part 10 of the push bar 6 is pivoted about pivot P5 with respect to the upper bar 14 in a counter clockwise direction R1. By doing so, the second part 11 of the push bar 6 will be pivoted about pivot P6 with respect to the lower bar 15 in a clockwise direction R2. Also the front bar 16 and the rear bar 17 will be pivoted about pivot P1, P2 with respect to the lower bar 15 in a clockwise direction R3, R4, respectively. During the pivoting of the front bar 16 and the rear bar 17, the upper bar 14 will be moved towards the lower bar 15, whilst maintaining in a parallel relationship therewith. As can be seen, during folding of the stroller 1, the first part 10 of the push bar 6 pivots in opposite direction with respect to the upper bar 14 as the front bar 16 and the rear bar 17, whilst the second part 11 pivots in the same direction with respect to the lower bar 15 as the front bar 16 and the rear bar 17.

Figures 5A-5D show side views of the stroller 1 during folding of the stroller 1 from the erect position as shown in figure 5A to the fully collapsed position as shown in fire 5D.

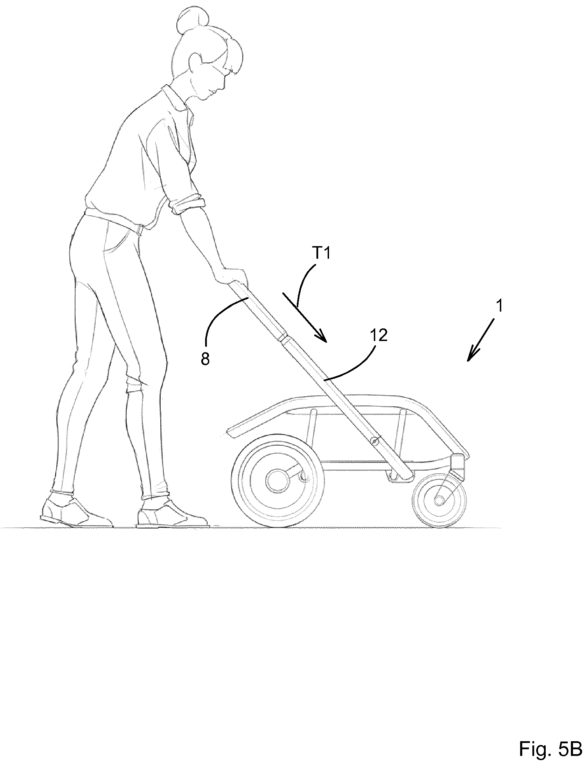

Starting from the fully erect position as shown in figure 5A, a user will push on the push button 18 on the bridge part 8, after which she can slide the upper portion 13 into the lower portion 12 in the direction as indicated by arrow T1. See figure 5B.

When pushing the push button 18 also the locking mechanism between the first part 10 and the second part 11 of the push bar 6 can be unlocked. It is also possible that the locking mechanism is being unlocked by the sliding movement of the upper portion 13 into the lower portion 12.

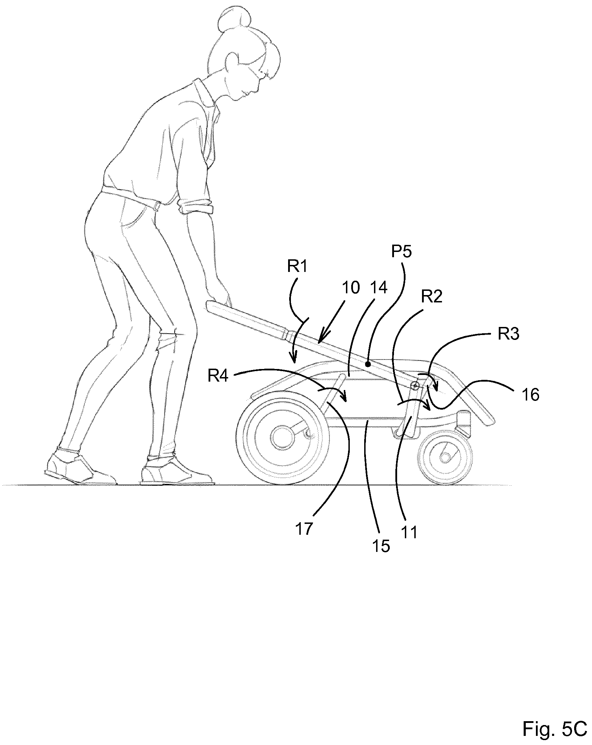

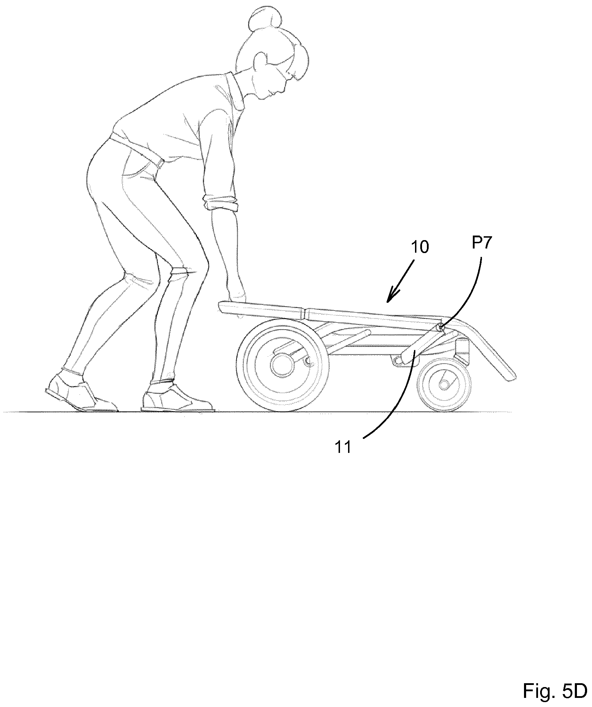

After or during inserting the upper portion 13 into the lower portion 12 or simultaneously therewith, the user will push the handle formed by the bridge part 8 downwards, whereby the first part 10 of the push bar 6 is pivoted about pivot P5 with respect to the upper bar 14 in a counter clockwise direction R1. By doing so, the second part 11 of the push bar 6, the front bar 16 and the rear bar 17 will be pivoted about pivot P6, P1, P2 with respect to the lower bar 15 in a clockwise direction R2, R3, R4, whereby the upper bar 14 will be moved towards the lower bar 15. Figure 5C shows a partially collapsed position of the stroller 1. By further pivoting the first part 10 of the push bar 6 about pivot P5 with respect to the upper bar 14 in the counter clockwise direction R1, the stroller 1 is folded in the collapsed position as shown in figure 5D.

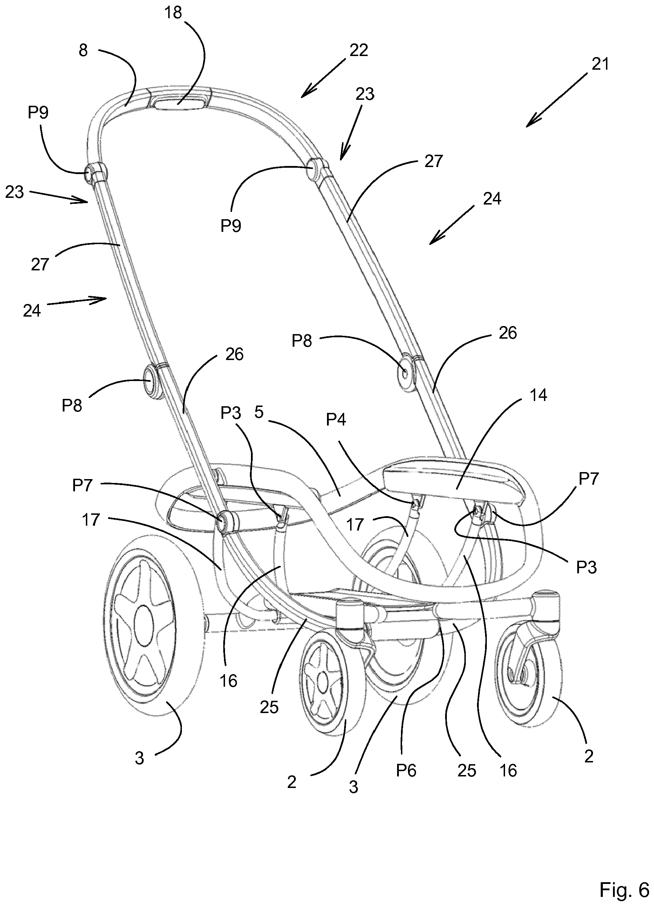

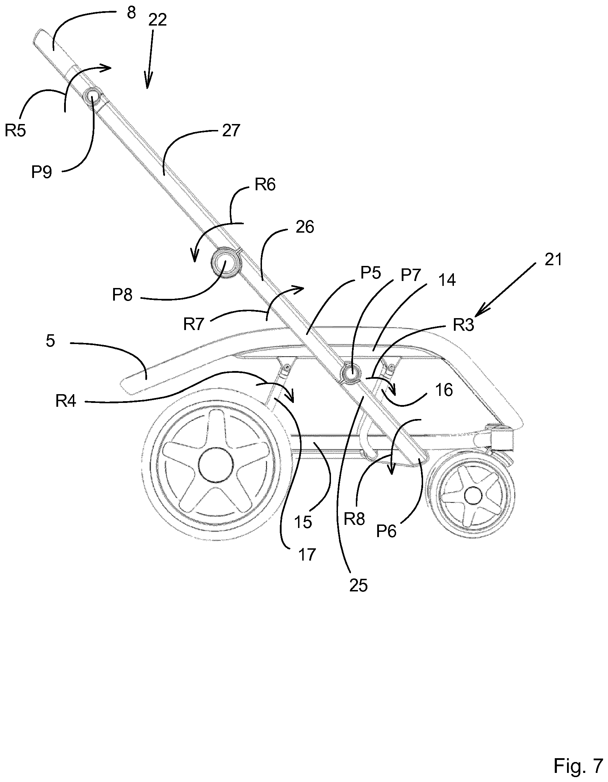

Figures 6 and 7 show a perspective view and side view of a second embodiment of a stroller 21 according to the invention.

The stroller 21 differs from the stroller 1 only by having a push bar 22 instead of push bar 6.

The push bar 22 is U-shaped and comprises a bridge part 8 and two leg portions 23. The bridge part 8 forms the handle of the push bar 22. Each leg portion 23 comprises a foldable first part 24 and a second part 25. The first part 24 is provided with a lower portion 26 and an upper portion 27 which is pivotably connected at pivot P8 to the lower portion 26. The upper portion 27 is pivotably connected at pivot P9 at a side remote of the lower portion 26 to the bridge part 8.

The first part 24 and the second part 25 are pivotably connected at pivot P7.

To fold the stroller 21 from the erect position as shown in figures 6 and 7, a user will push on the push button 18 on the bridge part 8, after which she can pivot the bridge part 8 in clockwise direction R5 with respect to the upper part 27, pivot the upper part 27 in counter clockwise direction R6 with respect to the lower part 26 and pivot the lower part 26 of the first part 24 in clockwise direction R7 with respect to the upper bar 14. By doing so, the second part 25 of the push bar 22 will be pivoted in counter clockwise direction R8 with respect to the lower part 14 and the front bar 16 and the rear bar 17 will be pivoted about pivot P1, P2 with respect to the lower bar 15 in a clockwise direction R3, R4.

During these movements, the upper bar 14 will be moved towards the lower bar 15 until the stroller 21 is fully collapsed.

As can be seen, during folding of the stroller 21, the first part 24 of the push bar 22 pivots in the same direction with respect to the upper bar 14 as the front bar 16 and the rear bar 17, whilst the second part 25 pivots in the opposite direction with respect to the lower bar 15 as the front bar 16 and the rear bar 17.

The pivoting of the fist part of the push bar 6, 22 about the pivot P5 in respectively the counter clockwise direction R1 and the clockwise direction R7 is facilitated in that by the stroller 1 the pivot P7 lies below a line through the pivots P5 and P6, whilst by the stroller 21 the pivot P7 lies above a line through the pivots P5 and P6.

By all embodiments the ends of the first part 10, 24 and the second part 11, 25 are pivotably connected at a pivot P7 being a different pivot than the pivots P5, P6, where the first part 10, 24 is pivotably connected to the first bar of the four-bar linkage mechanism 7 respectively where the second part 11, 25 is pivotably connected to the second bar of the four-bar linkage mechanism 7. In the erect position, the pivot P7 between the first part 10, 24 and the second part 11, 25 is located between and at a distance of the pivot P5 of the first part 10, 24 and the first bar of the four-bar linkage mechanism 7 and the pivot P6 of the second part 11, 25 and the second bar of the four-bar linkage mechanism 7.

It is also possible to use other kinds of four-bar linkage mechanisms than a parallelogram linkage mechanism. However, the parallelogram linkage mechanism has the advantage that a very compact collapsed stroller can be obtained.

It is also possible to position the pivot P5 behind or in front of the pivots P3 and P4. It is also possible to position the pivot P6 behind or between the pivots P1 and P2.

It is also possible to lock the first part and the second part of the push bar indirectly with respect to each other, for example by locking the first bar with respect to the upper bar, or by locking the second bar with respect to the lower bar. In this way, the first bar and the second bar are also prevented from pivoting with respect to each other.

By the two above described embodiments, the connect the first part and the second part of the push bar are pivotably connected to bars of the four-bar linkage mechanism, being connected to each other by other bars. It is also possible to connect the first part and the second part of the push bar to bars of the four-bar linkage mechanism, which are directly pivotably connected to each other.

The person skilled in the art will realize that the present invention is by no means limited to the preferred embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the scope should not be construed as limiting the scope of the claims.

### LIST OF REFERENCE SIGNS

- 1: stroller
- 2: wheel
- 3: rear wheel
- 4: folding mechanism
- 5: frame
- 6: push bar
- 7: four-bar linkage mechanism
- 8: bridge part
- 9: leg portion
- 10: first part
- 11: second part
- 12: lower portion
- 13: upper portion
- 14: upper bar
- 15: lower bar
- 16: front bar
- 17: rear bar
- 18: push button
- 21: stroller
- 22: push bar
- 23: leg portion
- 24: first part
- 25: second part
- 26: lower portion
- 27: upper portion
- P1: first pivot
- P2: second pivot
- P3: third pivot
- P4: fourth pivot
- P5: fifth pivot
- P6: sixth pivot
- P7: seventh pivot
- P8: pivot
- P9: pivot
- R1: counter clockwise direction
- R2: clockwise direction
- R3: clockwise direction
- R4: clockwise direction
- R5: clockwise direction
- R6: counter clockwise direction
- R7: clockwise direction
- R8: counter clockwise direction
- T1: arrow

## Claims

1. A stroller (1, 21) being foldable from an erect position to a collapsed position and vice versa, which stroller (1, 21) comprises a collapsible folding mechanism (4) provided with a push bar (6, 22) and at least one four-bar linkage mechanism (7), **characterized in that** the push bar (6, 22) comprises a first part (10, 24) provided with a handle, which first part (10, 24) is pivotably connected at a fifth pivot (P5) to a first bar of the four-bar linkage mechanism (7), which push bar (6, 22) further comprises a second part (11, 25) pivotably connected at a sixth pivot (P6) to a second bar of the four-bar linkage mechanism (7), whilst ends of the first part (10, 24) and the second part (11, 25) are pivotably connected at a seventh pivot (P7) to each other, which seventh pivot (P7) being a different pivot than the fifth and sixth pivots (P5, P6), where the first part (10, 24) is pivotably connected to the first bar (14) of the four-bar linkage mechanism (7) respectively where the second part (11, 25) is pivotably connected to the second bar (15) of the four-bar linkage mechanism (7), wherein the first part (10, 24) and the second part (11, 25) are detachably lockable with respect to each other in the erect position of the stroller (1, 21) to prevent collapsing of the four-bar linkage mechanism.

2. A stroller (1, 21) according to claim 1, **characterized in that** the first part (10, 24) and the second part (11, 25) of the push bar (6, 22) are detachably lockable with respect to each other at least near the pivot (P7).

3. A stroller (1, 21) according to claim 1 or 2, **characterized in that** in the erect position of the stroller (1, 21), the first part (10, 24) and the second part (11, 25) of the push bar (6, 22) are in line with each other.

4. A stroller (1, 21) according to one of the preceding claims, **characterized in that** the four-bar linkage mechanism (7) is a parallelogram linkage mechanism.

5. A stroller (1, 21) according to one of the preceding claims, **characterized in that** the four-bar linkage mechanism (7) comprising an upper bar (14), a lower bar (15), a front bar (16) and a rear bar (17), wherein the lower bar (15) is pivotably connected at a first pivot (P1) and a second pivot (P2) to the front bar (16) and the rear bar (17) respectively, whilst the upper bar (14) is pivotably connected at a third pivot (P3) and a fourth pivot (P4) to the front bar (16) and the rear bar (17) respectively, wherein the first part (10, 24) of the push bar (6, 22) is pivotably connected at the fifth pivot (P5) to the upper bar (14) and the second part (11, 25) of the push bar (6, 22) is pivotably connected at the sixth pivot (P6) to the lower bar (15), whilst ends of the first part (10, 24) and the second part (11, 25) are pivotably connected to each other at the pivot, being the seventh pivot (P7).

6. A stroller (1, 21) according to claim 5, **characterized in that** at least in the erect position at least one of the first part (10, 24) and second part (11, 25) of the push bar (6, 22) extend in another direction as the front bar (16) and the rear bar (17).

7. A stroller (1, 21) according to claim 5 or 6, **characterized in that** the fifth pivot (P5) is located between the third pivot (P3) and the forth pivot (P4), whilst the first pivot (P1) is located between the second pivot (P2) and the sixth pivot (P6).

8. A stroller (1) according to claim 5, 6 or 7, **characterized in that** during folding of the stroller (1), the first part (10) of the push bar (6) pivots in opposite direction with respect to the upper bar (14) as the front bar (16) and the rear bar (17), whilst the second part (11) pivots in the same direction with respect to the lower bar (15) as the front bar (16) and the rear bar (17) or vice versa.

## Patentansprüche

1. Ein Kinderwagen (1, 21), der aus einer aufrechten Position in eine zusammengeklappte Position und umgekehrt faltbar ist, wobei der Kinderwagen (1, 21) einen zusammenklappbaren Faltmechanismus (4) mit einer Schubstange (6, 22) aufweist und mindestens ein Vier-Gelenk-Gestänge (7) umfasst, **dadurch gekennzeichnet, dass** die Schubstange (6, 22) einen ersten Teil (10, 24) mit einem Griff umfasst, wobei der erste Teil (10, 24) an einem fünften Drehpunkt (P5) schwenkbar verbunden mit einer ersten Stange des Vier-Gelenk-Gestänges (7), die Schubstange (6, 22) ferner umfassend ein zweites Teil (11, 25), das an einem sechsten Drehpunkt (P6) schwenkbar verbunden ist mit einer zweiten Stange des Vier-Gelenk-Gestänges (7), wobei Enden des ersten Teils (10, 24) und des zweiten Teils (11, 25) an einem siebten Drehpunkt (P7) schwenkbar miteinander verbunden sind, der unterschiedlich ist von den fünften und sechsten Drehpunkten (P5, P6), wobei der erste Teil (10, 24) schwenkbar mit der ersten Stange (14) des Vier-Gelenk-Gestänges (7) verbunden ist, bzw. wobei der zweite Teil (11, 25) schwenkbar verbunden ist mit der zweiten Stange (15) des Vier-Gelenk-Gestänges (7), wobei der erste Teil (10, 24) und der zweite Teil (11, 25) in der aufrechten Position des Kinderwagens (1, 21) lösbar gegeneinander verriegelbar sind, um ein Zusammenklappen des Vier-Gelenk-Gestänges (7) zu verhindern.

2. Kinderwagen (1, 21) nach Anspruch 1, **dadurch gekennzeichnet, dass** der erste Teil (10, 20 24) und der zweite Teil (11, 25) der Schubstange (6, 22) miteinander abnehmbar verriegelbar sind, zumindest in der Nähe des Drehpunktes (P7).

3. Kinderwagen (1, 21) nach Anspruch 1 oder 2, **dadurch gekennzeichnet, dass** in der aufrechten Position des Kinderwagens (1, 21) der erste Teil (10, 24) und der zweite Teil (11, 25) des Kinderwagens die Schubstangen (6, 22) linear zueinander ausgerichtet sind.

4. Kinderwagen (1, 21) nach einem der vorstehenden Ansprüche, **dadurch gekennzeichnet, dass** das Vier-Gelenk-Gestänge (7) ein Parallelogramm-Gestänge-Mechanismus ist.

5. Kinderwagen (1, 21) gemäß einem der vorstehenden Ansprüche, **dadurch gekennzeichnet, dass** das Vier-Gelenk-Gestänge (7) eine obere Stange (14), eine untere Stange (15), eine vordere Stange (16) und eine hintere Stange (17) umfasst, wobei die untere Stange (15) an einem ersten Drehpunkt (P1) bzw. einem zweiten Drehpunkt (P2) schwenkbar verbunden ist mit der der vorderen Stange (16) bzw. der hinteren Stange (17), während die obere Stange (14) an einem dritten Drehpunkt (P3) und einem vierten Drehpunkt (P4) schwenkbar an der vorderen Stange (16) bzw. der hinteren Stange (17) verbunden ist, wobei der erste Teil (10, 24) der Schubstange (6, 22) an dem fünften Drehpunkt (P5) schwenkbar mit der oberen Stange (14) verbunden ist und dem zweiten Teil (10, 25) der Schubstange (6, 22) an dem sechsten Drehpunkt (P6) mit der unteren Stange (15) verbunden ist, während die Enden des ersten Teils (10, 24) und des zweiten Teils (11, 25) schwenkbar an einem Drehpunkt miteinander verbunden sind, welcher der siebte Drehpunkt (P7) ist.

6. Kinderwagen (1, 21) nach Anspruch 5, **dadurch gekennzeichnet, dass** zumindest in der aufrechten Position mindestens einer von dem ersten Teil (10, 24) und dem zweiten Teil (11, 25) der Schubstange (6, 22) sich in eine andere Richtung als die vordere Stange (16) und die hintere Stange (17) erstrecken.

7. Kinderwagen (1, 21) nach Anspruch 5 oder 6, **dadurch gekennzeichnet, dass** der fünfte Drehpunkt (P5) zwischen dem dritten Drehpunkt (P3) und dem vierten Drehpunkt (P4) angeordnet ist, während der erste Drehpunkt (P1) zwischen dem zweiten Drehpunkt (P2) und dem sechsten Drehpunkt (P6) angeordnet ist.

8. Kinderwagen (1) nach Anspruch 5, 6 oder 7, **dadurch gekennzeichnet, dass** beim Zusammenklappen des Kinderwagens (1) der erste Teil (10) der Schubstange (6) in entgegengesetzter Richtung in Bezug auf die obere Stange (14) schwenkt als die vordere Stange (16) und die hintere Stange (17), während der zweite Teil (11) in Bezug auf die untere Stange (15) in der gleichen Richtung schwenkt wie die vordere Stange (16) und die hintere Stange (17) oder umgekehrt.

## Revendications

1. Poussette (1, 21) pliable d'une position redressée à une position rabattue et vice versa, laquelle poussette (1, 21) comprend un mécanisme de pliage rabattable (4) pourvu d'une barre de poussée (6, 22) et d'au moins un mécanisme de quadrilatère articulé (7), **caractérisée en ce que** la barre de poussée (6, 22) comprend une première partie (10, 24) pourvue d'une poignée, laquelle première partie (10, 24) est raccordée de façon pivotante au niveau d'un cinquième pivot (P5) à une première barre du mécanisme de quadrilatère articulé (7), laquelle barre de poussée (6, 22) comprend en outre une seconde partie (11, 25) raccordée de façon pivotante au niveau d'un sixième pivot (P6) à une seconde barre du mécanisme de quadrilatère articulé (7), tandis que des extrémités de la première partie (10, 24) et de la seconde partie (11, 25) sont raccordées de façon pivotante l'une à l'autre au niveau d'un septième pivot (P7), lequel septième pivot (P7) étant un pivot différent des cinquième et sixième pivots (P5, P6), où la première partie (10, 24) est raccordée de façon pivotante à la première barre (14) du mécanisme de quadrilatère articulé (7) respectivement où la seconde partie (11, 25) est raccordée de façon pivotante à la seconde barre (15) du mécanisme de quadrilatère articulé (7), dans laquelle la première partie (10, 24) et la seconde partie (11, 25) sont verrouillables de façon détachable l'une par rapport à l'autre dans la position redressée de la poussette (1, 21) pour empêcher le mécanisme de quadrilatère articulé de se rabattre.

2. Poussette (1, 21) selon la revendication 1, **caractérisée en ce que** la première partie (10, 24) et la seconde partie (11, 25) de la barre de poussée (6, 22) sont verrouillables de façon détachable l'une par rapport à l'autre au moins à proximité du pivot (P7).

3. Poussette (1, 21) selon la revendication 1 ou 2, **caractérisée en ce que** dans la position redressée de la poussette (1, 21), la première partie (10, 24) et la seconde partie (11, 25) de la barre de poussée (6, 22) sont alignées l'une avec l'autre.

4. Poussette (1, 21) selon l'une des revendications précédentes, **caractérisée en ce que** le mécanisme de quadrilatère articulé (7) est un mécanisme de parallélogramme articulé.

5. Poussette (1, 21) selon l'une des revendications précédentes, **caractérisée** en ce le mécanisme de quadrilatère articulé (7) comprend une barre supérieure (14), une barre inférieure (15), une barre avant (16) et une barre arrière (17), dans laquelle la barre inférieure (15) est raccordée de façon pivotante au niveau d'un premier pivot (P1) et d'un deuxième pivot (P2) à la barre avant (16) et à la barre arrière (17) respectivement, tandis que la barre supérieure (14) est raccordée de façon pivotante au niveau d'un troisième pivot (P3) et d'un quatrième pivot (P4) à la barre avant (16) et à la barre arrière (17) respectivement, dans laquelle la première partie (10, 24) de la barre de poussée (6, 22) est raccordée de façon pivotante au niveau du cinquième pivot (P5) à la barre supérieure (14) et la seconde partie (11, 25) de la barre de poussée (6, 22) est raccordée de façon pivotante au niveau du sixième pivot (P6) à la barre inférieure (15), tandis que des extrémités de la première partie (10, 24) et de la seconde partie (11, 25) sont raccordées de façon pivotante l'une à l'autre au niveau du pivot, qui est le septième pivot (P7).

6. Poussette (1, 21) selon la revendication 5, **caractérisée en ce qu'**au moins dans la position redressée au moins l'une de la première partie (10, 24) et de la seconde partie (11, 25) de la barre de poussée (6, 22) s'étend dans une autre direction que la barre avant (16) et la barre arrière (17).

7. Poussette (1, 21) selon la revendication 5 ou 6, **caractérisée en ce que** le cinquième pivot (P5) est situé entre le troisième pivot (P3) et le quatrième pivot (P4) tandis que le premier pivot (P1) est situé entre le deuxième pivot (P2) et le sixième pivot (P6).

8. Poussette (1) selon la revendication 5, 6 ou 7, **caractérisée en ce que**, pendant le pliage de la poussette (1), la première partie (10) de la barre de poussée (6) pivote dans une direction opposée par rapport à la barre supérieure (14) à la barre avant (16) et à la barre arrière (17), tandis que la seconde partie (11) pivote dans la même direction par rapport à la barre inférieure (15) que la barre avant (16) et la barre arrière (17) ou vice versa.
